# EUROPÄISCHE PATENTSCHRIFT

(11) **EP 3 520 989 B1**
(45) Veröffentlichungstag und Bekanntmachung des Hinweises auf die Patenterteilung: **28.10.2020**
(21) Anmeldenummer: 18155016.1
(22) Anmeldetag: 02.02.2018
(51) Int. Cl.: B29C 48/08, B29C 48/88, B29C 48/92

(54) **VERFAHREN UND VORRICHTUNG ZUR HERSTELLUNG EINER KUNSTSTOFF-FOLIE**
METHOD AND DEVICE FOR MANUFACTURING A PLASTIC FILM
PROCÉDÉ ET DISPOSITIF DE FABRICATION D'UNE FEUILLE EN MATIÈRE PLASTIQUE

(43) Veröffentlichungstag der Anmeldung: 07.08.2019
(73) Patentinhaber: SML Maschinengesellschaft m.b.H., 4860 Lenzing (AT)
(72) Erfinder: Rauscher, Thomas, 4880 Berg im Attergau (AT); Preuner, Robert, 4852 Weyregg (AT); Eberhard, Doris, 8731 Gaal (AT)
(74) Vertreter: Gosdin, Michael

(56) Entgegenhaltungen:
- EP-A1- 3 228 436
- US-A- 4 608 221
- US-B1- 6 619 941

## Beschreibung

Die Erfindung betrifft ein Verfahren zur Herstellung einer Kunststoff-Folie, insbesondere einer mehrschichtigen Dehnfolie (auch als Stretchfolie bezeichnet), bei der Kunststoffmaterial aus einer Flachdüse ausgebracht wird und in Förderrichtung nachfolgend um mindestens eine Kühlwalze geführt und dabei abgekühlt wird, wobei die Folie zwischen der Flachdüse und der Kühlwalze über einen vorgegebenen Umschlingungswinkel um eine Temperierwalze geführt wird. Des Weiteren betrifft die Erfindung eine Vorrichtung zur Herstellung einer Kunststoff-Folie.

Bei der Herstellung insbesondere von mehrschichtigen Dehnfolien mittels des gattungsgemäßen Cast-Prozesses kann Dehnfolie im Dickenbereich von 6 bis 50 µm produziert werden. Solche Folien werden zum Beispiel zum Umwickeln (Einstretchen) von Gütern zur Ladungssicherung auf einer Palette verwendet.

Eine Dehnfolie besteht zumindest aus drei Schichten. Die Mittelschicht ist für die mechanische Festigkeit verantwortlich. Eine Außenschicht ist für den "Cling-Effekt" (Klebeeffekt) der Folie verantwortlich; die andere Außenschicht sorgt für einen niedrigen Haftungskoeffizienten.

Bei der Herstellung von Folien nach dem gattungsgemäßen Verfahren tritt das geschmolzene Polymer als Folienvorhang aus einer Breitschlitzdüse aus und wird auf eine sich drehende Cast-Walze (Kühlwalze) gegossen. Der seitliche Rand der Folie wird mittels strahlförmig aus einer Düse austretender Luft oder mittels Randstreifen-Aufladeelektroden elektrostatisch auf der sich drehenden Cast-Walze fixiert.

Dabei tritt die Folie aus dem Spalt der Düse mit einer ersten Dicke aus und wird zur niedrigeren Produktdicke ausgezogen. Das Verhältnis der Dicken wird als Draw-down bezeichnet. Im Prinzip handelt es sich um eine Verstreckung vom (dicken) Düsenaustrittsspalt zur (geringen) Dicke der fertig produzierten Folie auf der Chillroll (Kühlwalze).

Durch eine rasche Abkühlung der Folie auf der Kühlwalze wird der durch die hohe und schnelle Verstreckung aus der Düse heraus verursachte Spannungszustand der Folie eingefroren (Memoryeffekt des Polymers). Dadurch weist die Folie einen hohen Schrumpf auf und die mechanischen Werte, insbesondere auch die verfügbare Dehnung in Längsrichtung (Ultimate) und die Durchstoßfestigkeit der Folie sowie diverse andere für das Einstretchen der Folie wichtige Qualitätsparameter, werden teils wesentlich verschlechtert, wenn die Relaxation der Folie durch immer höhere Produktionsgeschwindigkeiten beschnitten wird.

Dabei werden bereits Produktionsgeschwindigkeiten bei der Herstellung von Dehnfolien im Bereich von 400 bis 750 m/min angestrebt bzw. realisiert. Eine weitere Steigerung der Linien-Geschwindigkeit ist nicht zuletzt dadurch begrenzt, dass bei höheren Geschwindigkeit die Verstreckung aus der Düse heraus (letztlich also die Verstreckgeschwindigkeit) weiter gesteigert wird und dadurch die oben genannten Qualitätsverschlechterungen der Folie eintreten, weil der Abstand zwischen Düsenaustritt bis zur Linie des Erstarrens auf der Kühlwalze von der Folie in kürzerer Zeit durchlaufen wird. Letztlich hat die Folie zu wenig Zeit zur Relaxation.

Eine Möglichkeit, dieser Verschlechterung entgegenzuwirken, ist es, die Folie langsamer abzukühlen.

Insoweit ist es bekannt, dass bei der Folienproduktion nach dem gattungsgemäßen Verfahren (Chillrollverfahren) eine Vergrößerung des Abstandes von Düsenaustritt zur Kühlwalzenoberfläche angestrebt wird, so dass beispielsweise die Dehnung der produzierten Folie in Längsrichtung der Folie verbessert wird. Typischerweise beträgt der Abstand von Düsenaustritt zur Kühlwalzenoberfläche 15 bis 40 mm. Eine Verdopplung des (maximal üblichen) Spalts auf 80 mm führt bereits zu einer merklichen Erhöhung des maximalen Dehnungsvermögens der Folie. Nachteilig ist dann allerdings, dass die Folie bei der Produktion im relativ langen Spalt instabil geführt wird und zum Abreißen neigt, weshalb für die genannte Vorgehensweise enge Grenzen gesetzt sind.

Ein Verfahren der eingangs genannten Art sowie eine entsprechende Vorrichtung ist aus der EP 3 228 436 A1 bekannt. Ähnliche Lösungen zeigen die US 4 608 211 A und die US 6 619 941 B1**.**

Aus der genannten US 4 608 221 A und aus der US 4 486 377 A sind Vorrichtungen bekannt, die zwischen Düse und einem Kühlwalzenspalt angeordnet sind und die zur Vermeidung von Resonanzschwingungen der Folien in Folienlängsrichtung dienen. Diese kritischen Resonanzschwingungen der Folie in Folienlängsrichtung bezeichnet man als Abzugsresonanz (Draw Resonance). Mit dem Problem einer hinreichenden Relaxation der Folie zwischen Düse und Kühlwalze zwecks Verbesserung der Folieneigenschaften beschäftigen sich diese Dokumente nicht.

Auch die genannte EP 3 228 436 A1 beschäftigt sich mit dem Problem, Resonanzschwingungen in Folienlängsrichtung des Materialabschnitts eines flächigen Kunststoffmaterials zu verhindern, welche sich zwischen dem Austritt aus einer Düse und einem Walzensystem befindet. Zur Vermeidung derartiger Resonanzschwingungen wird hier eine Zwischenwalze zwischen Düse und Walze angeordnet. Weitere Prozesse zur Herstellung von folienartigen Kunststoffartikeln sind in der US 4 105 386 A und in der EP 2 431 153 B1 beschrieben.

Ein Verfahren zur Herstellung eines Laminats offenbart die EP 1 095 767 B1**,** bei der ein aus einer Düse ausgebrachtes flächenförmiges Kunststoffsubstrat mit einem flächigen metallischen Material verbunden wird.

Der Erfindung liegt die **Aufgabe** zugrunde, ein Verfahren der eingangs genannten Art sowie eine entsprechende Vorrichtung zu schaffen, mit dem bzw. mit der es möglich ist, die eine Kunststoff-Folie aus geschmolzenem Polymer im Castfolienprozess herzustellen, wobei die Folie eine verbesserte Relaxation erfahren soll, um insofern deren Eigenschaften zu verbessern und/oder die Produktionsgeschwindigkeit zu erhöhen. Hiermit sollen insbesondere die Eigenschaften einer Dehnfolie verbessert werden.

Die **Lösung** dieser Aufgabe durch die Erfindung ist dadurch gekennzeichnet, dass die Temperierwalze einen Mittenbereich und zwei an diesen angrenzende Randbereiche aufweist, wobei die Folie im Mittenbereich von der Temperierwalze zumindest abschnittsweise auf Abstand gehalten wird, indem im Mittenbereich der Temperierwalze zwischen der Oberfläche der Temperierwalze und der Folie ein Luftpolster erzeugt wird, indem im Mittenbereich der Temperierwalze erhitzte Druckluft zwischen die Oberfläche der Temperierwalze und die Folie zugeführt wird, wobei die Folie in den Randbereichen mit der Temperierwalze in Kontakt gebracht wird und wobei die Temperatur der Druckluft bei deren Zuleitung in die Temperierwalze zwischen 60 °C und 350 °C liegt, vorzugsweise zwischen 100 °C und 250 °C.

Bevorzugt wird dabei in einem Bereich, der sich über die Breite der Folie und von der der Temperierwalze abgewandten Seite der Folie bis zur Kühlwalze erstreckt, gegenüber dem Umgebungsdruck ein Unterdruck erzeugt. Hierbei ist insbesondere vorgesehen, dass der Unterdruck im Bereich von der Ablösung der Folie von der Temperierwalze bis zur Kontaktnahme der Folie mit der Kühlwalze über der Breite der Folie erzeugt wird. Dabei wird bevorzugt ein Abstand (in radiale Richtung der Walzen) von 1 mm bis 60 mm, besonders bevorzugt von 15 mm bis 25 mm zwischen der Temperierwalze und der Kühlwalze gewählt (d. h. ein Spalt der genannten Größe), wobei besagter Unterdruck in diesem Bereich erzeugt wird. Hierdurch wird die Folie von der Oberfläche der Temperierwalze abgelöst, während sich die Folie gleichzeitig an die Kühlwalze anschmiegt, so dass zwischen Folie und Kühlwalze Lufteinzug vermieden wird. Damit liegt ein guter Kontakt der Folie auf der Kühlwalze vor und somit eine gute und gleichmäßige Abkühlung der Folie, da lokal eingeschleppte Luftpolster zuverlässig vermieden werden können.

Die Kontaktnahme zwischen Folie und der Temperierwalze kann dabei durch elektrostatische Kräfte erzeugt werden; eine Alternative hierzu sieht vor, dass die Kontaktnahme zwischen Folie und der Temperierwalze durch Aufbringen eines Luftstroms auf die Folie erzeugt wird. Dabei ist die Kontaktnahme zwischen Folie und Temperierwalze bevorzugt auf die Ränder der Folie beschränkt.

Die Erzeugung des Luftpolsters erfolgt bevorzugt, indem im Mittenbereich der Temperierwalze die erhitzte Druckluft durch ein porös ausgebildetes Material der Temperierwalze zwischen die Oberfläche der Temperierwalze und die Folie zugeführt wird. Hierbei ist bevorzugt vorgesehen, dass die Temperatur der erhitzen Luft oberhalb der Vicat-Erweichungstemperatur des Materials liegt, aus dem die Folie besteht, insbesondere aus dem eine Haftschicht (Clinglayer) der Folie besteht.

Die Vicat-Erweichungstemperatur nach DIN EN ISO 306 wird mit einer Nadel (mit kreisrunder Fläche von 1 mm²) gemessen. Diese ist mit einer Prüfkraft von 10 N (Prüfkraft A) oder 50 N (Prüfkraft B) belastet. Der Probekörper mit einer zulässigen Dicke von 3 bis 6,4 mm wird einer definierten Heizrate von 50 bzw. 120 K/h ausgesetzt. Die Vicat-Temperatur ist erreicht, wenn der Eindringkörper eine Eindringtiefe von 1 mm erreicht. Diese Temperatur gibt Aufschluss über die praktische Dauereinsatzgrenze des Materials, die bei circa 15 K unter der Vicat-Temperatur liegt.

Die Temperierwalze wird nach einer bevorzugten Ausgestaltung des vorgeschlagenen Verfahrens im Mittenbereich auf einer höheren Temperatur gehalten als in den Randbereichen, wobei die Temperatur in den Randbereichen vorzugsweise zwischen 10 °C und 95 °C gehalten wird.

Der Umschlingungswinkel der Folie um die Temperierwalze liegt bevorzugt zwischen 50° und 180°.

Die Folie wird dabei bevorzugt mit einer Geschwindigkeit von mindestens 400 m/min, vorzugsweise von mindestens 750 m/min und besonders bevorzugt mit mindestens 900 m/min, von der Kühlwalze abgeführt.

Die Folie wird dabei frei von weiteren laminierten Schichten und wie auf die Temperierwalze aufgebracht von der Kühlwalze abgeführt. Demgemäß erfolgt keine Verbindung der Folie hinter dem Düsenaustritt der Flachdüse mit einem anderen Substrat. Insoweit unterscheidet sich das vorgeschlagene Verfahren mit verschiedenen anderen Verfahren, bei denen Laminier-Prozesse durchgeführt werden, bei denen das aus der Flachdüse ausgebrachte Material mit weiteren Substraten verbunden wird.

Somit wird die Folie im Bereich der Temperierwalze zumindest über einen Teil ihrer Breite auf einer vorgegebenen Temperatur gehalten, die oberhalb der Temperatur der Kühlwalze liegt, wobei die Temperatur der Kühlwalze bevorzugt zwischen 10 °C und 60 °C gehalten wird. Die Temperatur der Folie im Bereich der Temperierwalze liegt bevorzugt zumindest über einen Abschnitt ihrer axialen Erstreckung zwischen 60 °C und 350 °C, insbesondere zwischen 100 °C und 250 °C.

Die Vorrichtung zur Herstellung einer Kunststoff-Folie, insbesondere einer mehrschichtigen Dehnfolie, umfassend eine Flachdüse, über die Kunststoffmaterial ausgebracht werden kann, und mindestens eine in Förderrichtung nachfolgende Kühlwalze für die Abkühlung der Folie, wobei eine Temperierwalze angeordnet ist, die zwischen der Flachdüse und der Kühlwalze angeordnet ist und über die die Folie über einen vorgegebenen Umschlingungswinkel geführt werden kann, ist erfindungsgemäß dadurch gekennzeichnet, dass die Temperierwalze einen Mittenbereich und zwei an diesen angrenzende Randbereiche aufweist, wobei die Bereiche durch separate in axiale Richtung aufeinander folgende Walzenteile gebildet werden, wobei die Temperierwalze im Mittenbereich zumindest abschnittsweise und zumindest teilweise aus einem porösen Material besteht, welches mit mindestens einer Leitung zur Zuleitung von Luft in das poröse Material in Verbindung steht, um zwischen der Folie und dem Mittenbereich ein Luftpolster ausbilden zu können, und wobei in den Randbereichen Mittel zur Herstellung eines Kontakts zwischen der Folie und der Temperierwalze angeordnet sind.

Bevorzugt vorgesehen sind weiterhin Mittel zur Erzeugung eines Unterdrucks in einem Bereich, der sich über die Breite der Folie und von der der Temperierwalze abgewandten Seite der Folie bis zur Kühlwalze erstreckt.

Bei den Mitteln zur Herstellung des Kontakts handelt es sich insbesondere um Mittel zur Erzeugung eines elektrostatischen Feldes oder um Mittel zur Ausbringung eines Luftstroms auf die Folie (wobei durch den Luftstrom die Folie an die Temperierwalze angeblasen werden kann, so dass sie an der Temperierwalze anhaftet).

Die Temperierwalze besteht gemäß einer bevorzugten Ausgestaltung der Erfindung einmal im Mittenbereich und jeweils in den beiden Randbereichen aus rotationssymmetrischen Teilen, die jeweils mit einem elektromotorischen Antrieb verbunden sind, um einmal das rotationssymmetrische Teil des Mittenbereichs und einmal die rotationssymmetrischen Teile der beiden Randbereiche mit individueller Drehgeschwindigkeit antreiben zu können.

Eine alternative Ausgestaltung sieht vor, dass die Temperierwalze in den beiden Randbereichen aus rotationssymmetrischen Teilen besteht, die jeweils mit einem elektromotorischen Antrieb verbunden sind, wobei das den Mittenbereich bildende Teil der Temperierwalze nicht-drehbar angeordnet ist. Bei dieser Ausgestaltung kann weiter vorgesehen werden, dass der Mittenbereich durch ein nicht rotationssymmetrisches Teil gebildet wird (hierdurch kann der porös ausgebildete und relativ teure Abschnitt des Mittenbereichs klein gehalten werden).

Vorgesehen kann auch werden, dass in einem Bereich oberhalb des Spalts zwischen der Temperierwalze und der Kühlwalze, also insbesondere oberhalb des Bereiches, in dem Unterdruck erzeugt wird, ein Infrarotstrahler zur Beheizung der Folie im Bereich der bestehenden Umschlingung der Folie um die Temperierwalze angeordnet ist. Dieser Infrarotstrahler erstreckt sich bevorzugt über die gesamte Breite des Mittenteils der Temperierwalze.

Durch die Erzeugung des genannten Luftpolsters, das die Folie quasi schwebend über der Oberfläche im Mittenbereich der Temperierwalze hält, besteht somit nicht die Notwendigkeit, dass sich der Mittenbereich der Temperierwalze während des Betriebs der Vorrichtung dreht. Vielmehr kann dieser Abschnitt der Temperierwalze feststehen; in diesem Falle drehen lediglich die beiden Abschnitte der Temperierwalze, die beiden Randbereiche derselben bilden. Für die Umfangsgeschwindigkeit der Randbereiche der Temperierwalze wird bevorzugt das 0,5-Fache bis 1-Fache der Umfangsgeschwindigkeit der Kühlwalze gewählt.

In den beiden Randbereichen der Temperierwalze kann dann eine Temperierung (z. B. mittels Wasser oder Öl) erfolgen.

Der Durchmesser der Temperierwalze liegt bevorzugt in einem Bereich zwischen 120 mm und 400 mm.

Steht der Mittenbereich der Temperierwalze still, d. h. rotiert dieser nicht, kann als bevorzugte Ausgestaltung vorgesehen werden, dass dieser von der Folie umschlungene Teil nicht rotationssymmetrisch ausgebildet ist; er kann vielmehr beliebig gestaltet sein. Dies hat den Vorteil, dass die mikro-porös ausgebildete Fläche zur Durchleitung von Luft zwecks Bildung des Luftpolsters klein gehalten werden kann, was wirtschaftliche Vorteile hat.

Ist indes vorgesehen, dass auch der Mittenbereich der Temperierwalze rotiert, kann für diesen Bereich eine Umfangsgeschwindigkeit vorgesehen werden, der dem 0,5-Fachen bis 2,0-Fachen der Umfangsgeschwindigkeit der Kühlwalze entspricht. Wird also auch der Mittenbereich der Temperierwalze angetrieben, ist bevorzugt vorgesehen, diesen mit einer höheren Drehgeschwindigkeit als die Randbereiche zu rotieren.

Ein feststehender Mittenteil der Temperierwalze, ausgestattet mit poröser Oberfläche zur Durchleitung von Luft zwecks Erzeugung des Luftpolsters, hat verschiedene Vorteile: Das Einbringen der Luft zwecks Erzeugung des Luftpolsters in das Innere der Temperierwalze ist vorrichtungstechnisch besonders einfach möglich, da die Zufuhr von Luft an jeder beliebigen Stelle ohne Drehdurchführung erfolgen kann, insbesondere an der Seite der Temperierwalze, die vom umschlungenen Bereich durch die Folie abgewandt ist. Die Vorrichtung kann somit kostengünstig realisiert werden. Weiterhin besteht zwischen der bewegten Folie und dem Luftpolster eine Relativgeschwindigkeit, was zu einer besseren und gleichmäßigeren Wärmeübertragung zwischen Folie und Luft führt (es liegt dann eine andere relevante Nußelt-Zahl vor, die den konvektiven Wärmeübergang bestimmt). Schließlich gleitet die Folie durch die Relativbewegung zum Luftpolster besonders leicht. Dadurch kann Druckluft eingespart und Beeinträchtigungen der Folienoberfläche zuverlässig vermieden werden.

Bevorzugt wird, wie oben bereits dargelegt, die Folie also in den beiden Randbereichen auf einem tieferen Temperaturniveau gehalten als im Bereich des Mittenteils. Durch die im Randbereich niedrigere Folientemperatur bilden sich hier quasi Zugbänder aus, die relativ stabil sind und die Folie im weniger stabilen Mittenbereich mit bewegen bzw. führen. Im Mittenbereich der Folie, der nach dem Randbeschnitt dem nutzbaren Teil der Folie entspricht, wird indes eine höhere Temperatur aufrechterhalten, die vorteilhaft eine optimierte Relaxation der Folie sicherstellt.

Um sicherzustellen, dass der wärmere Mittenteil der Folie gegenüber den kälteren und damit zäheren Randbereichen der Folie nicht zurückbleibt, besteht die Möglichkeit, die Drehzahl des Mittenteils der Temperierwalze gegenüber den Randbereichen der Temperierwalze zu erhöhen. Durch die erhöhte, wenn auch geringe bestehende Reibung zwischen Luftpolster und Folie wird der Mittenteil der Folie merklich beschleunigt und egalisiert durch die Wahl einer erhöhten Oberflächengeschwindigkeit des Mittenteils einen eventuell bestehenden Verzug der Folie. Dies erfordert natürlich einen entsprechend höheren vorrichtungstechnischen Aufwand durch separate Antriebe des Mittelteils und der Randteile der Temperierwalze. Ferner besteht dann die Notwendigkeit, zwei Medien, nämlich Wasser zur Temperierung der Randbereiche und geheizte Druckluft zur Versorgung des porösen Mittenteils, koaxial einzubringen. Unter verfahrenstechnischen Gesichtspunkten stellt dies allerdings das Konzept mit den meisten Freiheitsgraden dar.

Die vorgesehene Temperierwalze fungiert als Relaxiervorrichtung, insbesondere bei der Produktion von Flachfolien, in der das Kunststoffmaterial insbesondere auf den Einsatz bei einer Dehnfolie optimiert werden kann. Namentlich wird der von der Düse zur Kühlwalze zurückgelegte Weg der Folie durch die zwischengeschaltete Temperierwalze (Relaxiervorrichtung) verlängert.

Die Folie aus thermoplastischen Polymeren wird also nicht direkt auf die Kühlwalze, sondern auf eine sich zwischen Düsenaustritt und Kühlwalze befindliche Relaxiervorrichtung extrudiert und erst in einem nachfolgenden Schritt an die nachfolgende Kühlwalze übergeben, an der sie unter Erstarrrungstemperatur bzw. Umgebungstemperatur abgekühlt wird.

Zwischen der Temperierwalze und der Kühlwalze ist bevorzugt eine "Vakuumbox" angeordnet, die einen Lufteinzug zwischen der Kühlwalze und der Folie minimiert.

Die Temperierwalze (Relaxiervorrichtung) ist bevorzugt in die drei oben genannten Bereiche (Mittenbereich und Randbereiche) unterteilt und wird angetrieben. In den Randbereichen erfolgt ein Anhaften der Folie an die Temperierwalze, wozu Luftstrahldüsen oder Elektroden eingesetzt werden können, die nach dem Prinzip der elektrostatischen Aufladung arbeiten.

Die Temperierwalze selber ist mit einer Temperierung versehen, wobei durch die Walze ein eingespeistes Wärmeträgermedium (z. B. Wasser oder Öl) geleitet werden kann, um die Walzenoberfläche auf eine bestimmte Temperatur zu regeln. Die Breite des Mittenbereichs entspricht der Breite der verwertbaren, beschnittenen Folie. Hier ist bevorzugt als Oberflächenmaterial für die Temperierwalze ein poröses (keramisches oder metallisches) Material verwendet, so dass durch Zuführen von Luft ein Luftpolster gebildet werden kann, welches die Folie von der Oberfläche der Temperierwalze im Mittenbereich fernhält und so eine Anhaftung verhindert. Die Folie kann somit problemlos auf der Temperierwalze gleiten.

Die zugeführte Luft zur Ausbildung des Luftpolsters wird dabei erhitzt, so dass es ermöglicht wird, die Folie auf einer relativ hohen Temperatur zu halten, die insbesondere größer ist als diejenige der Oberfläche der nachfolgenden Kühlwalze. Damit ist es möglich, eine vollkommene Erstarrung der Folie hinauszuzögern, um so eine Relaxation der Folie auf erhöhtem Temperaturniveau zu erzielen.

Für die Temperatur des Luftpolsters ist bevorzugt ein Bereich zwischen 60 °C und 350 °C vorgesehen, besonders bevorzugt zwischen 100 °C und 250 °C. Im Falle der Verarbeitung von Dehnfolien kann insbesondere hierfür eine Temperatur oberhalb der Vicat-Erweichungstemperatur des für die Cling-Außenschicht der Folie verwendeten Polymers des Dehnfolienverbunds vorgesehen werden.

Mit der vorliegenden Erfindung wird ein Verfahren bereitgestellt, mit dem eine Flachfolie gattungsgemäß produziert werden kann (also im ChillrollVerfahren), die in verbesserter Weise relaxiert werden kann. Hierdurch können bessere mechanische Folieneigenschaften erreicht werden. Dabei ist zunächst die Durchstoßfestigkeit zu nennen, die so verbessert werden kann. Weiterhin wird der Restschrumpf der Folie relaxiert bzw. verkleinert. Insbesondere wird bei sonst gleichen Einstellungen bzw. Bedingungen die in der Folie verbleibende Dehnung in Längsrichtung erhöht. Vor allem im Zusammenhang mit "Stretchwrap"-Folien wird das "Ultimate" der Folie, welches ein wichtiges Maß für die Eigenschaften der Folie beim Wickelprozess ("Einstretchprozess") von Paletten ist, verbessert.

Die verbesserte Relaxation in der Folie beim Einsatz der vorgeschlagenen Vorrichtung kann allerdings vorteilhaft umgekehrt auch zu einer Geschwindigkeitserhöhung der Produktionsanlage genutzt werden. Durch die Geschwindigkeitserhöhung erhöht sich zunächst die Beanspruchung durch eine erhöhte Verstreckungsgeschwindigkeit aus der Düse, was nachteilig ist und teils den Effekt aus der gewonnenen Relaxation aufbraucht. Der gewonnene Nutzen ist dafür allerdings ein höherer Ausstoß der Anlage unter Beibehaltung des Qualitätsniveaus der Folien. Somit kann die Wirtschaftlichkeit der Anlage wesentlich verbessert werden.

Mit der vorgeschlagenen Vorgehensweise wird also eine besser relaxierte Folie mit verbesserten mechanischen Eigenschaften bereitgestellt. Die Verbesserung des Ultimates wird mithin durch eine längere Schmelzefahne, die um die Temperierwalze zwischen Düsenaustritt und Kühlwalze geführt wird, im Luftspalt zwischen Düse und Kühlwalze erreicht. Dadurch verringert sich die Verstreckgeschwindigkeit aus der Düse heraus und gleichermaßen erhöht sich die Relaxationszeit.

In der Zeichnung ist ein Ausführungsbeispiel der Erfindung dargestellt. Es zeigen:
- Fig. 1: in der Seitenansicht eine Vorrichtung zur Herstellung einer mehrschichtigen Kunststofffolie und
- Fig. 2: in der Vorderansicht einen Teil der Vorrichtung gemäß Figur 1, in der ergänzend das Anliegen der herzustellenden Folie an eine Temperierwalze dargestellt ist.

In den Figuren ist eine Vorrichtung gezeigt, mit der eine mehrschichtige Dehnfolie 1 produziert werden kann. Hierzu wird Kunststoffschmelze, die bereits als mehrschichtiger Verbund vorbereitet ist, über den Düsenaustritt einer Flachdüse 2 ausgebracht, so dass eine Folie mit gewisser Breite vorliegt. Vom Düsenaustritt der Flachdüse 2 wird die Folie auf eine Temperierwalze 4 aufgebracht, die als Relaxationsvorrichtung fungiert. Die Folie 1 umschlingt dabei die Temperierwalze 4 um einen Umschlingungswinkel a. Von der Temperierwalze 4 gelangt die Folie 1 auf eine Kühlwalze 3, von der aus die abgekühlte Folie über eine Abhebewalze 10 von der Kühlwalze 3 abgenommen und (in Förderrichtung F) weitergefördert wird.

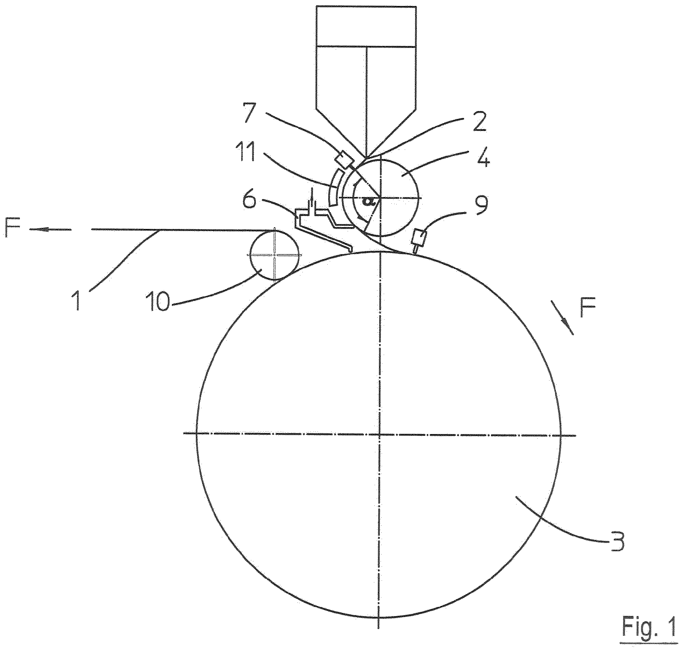

Damit zwischen Folie 1 und Kühlwalze 3 bei der erläuterten Führung der Folie 1 um die Kühlwalze 3 herum keine Luft gelangt, sind Mittel 6 zur Erzeugung eines Unterdrucks (Vakuumbox) vorgesehen, die an der äußeren Oberfläche der Folie 1 im Bereich der Temperierwalze 4 ansetzen und am Außenumfang der Kühlwalze 3 enden. Aus diesem Bereich wird Luft evakuiert, was in Figur 1 durch den Pfeil an den Mitteln 6 angedeutet ist.

Damit die Folie 1 bei ihrer Kühlung durch die Kühlwalze 3 diese ansonsten gut kontaktiert, wird sie in ihren beiden Randbereichen durch Mittel 9 zur Herstellung eines Kontakts zwischen Folie 1 und Kühlwalze 3 an letztere herangedrückt bzw. herangezogen. Dies kann durch einen Luftstrahl erfolgen oder durch elektrostatische Aufladung.

Zwischen dem Austritt der Folie 1 aus der Flachdüse 2 und den Mitteln 6 zur Erzeugung eines Unterdrucks ist ein Infrarotstrahler 11 angeordnet, um zusätzlich sicherzustellen, dass die Folie 1 auf einer gewünschten Temperatur gehalten werden kann.

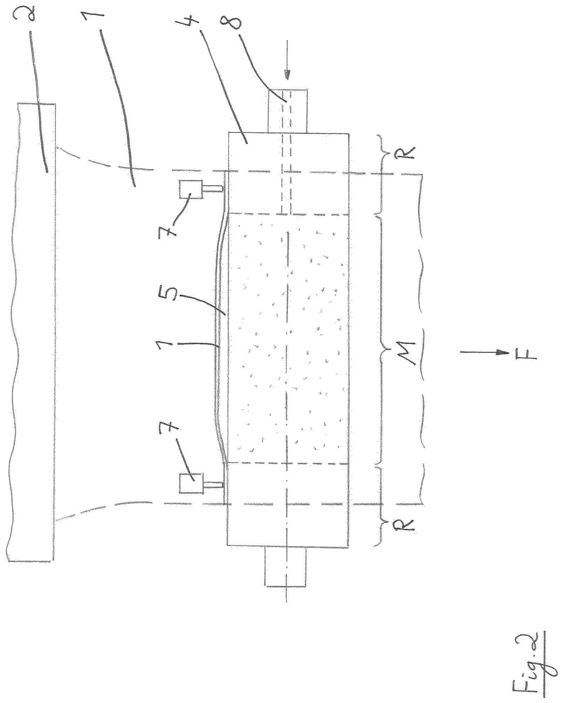

In Figur 2 sind Details zur Ausgestaltung der Temperierwalze 4 zu sehen, wonach diese einen Mittenbereich M sowie zwei seitliche Randbereiche R aufweist. Der Mittenbereich M wird durch eine Oberfläche aus porösem Material gebildet, welches mit einer Leitung 8 zur Zuleitung von Luft in Verbindung steht (siehe Pfeil in Figur 2 im Bereich der Bezugsziffer 8). Indes sind in den beiden Randbereichen R der Temperierwalze 4 Mittel 7 zur Herstellung eines Kontakts zwischen der Folie 1 und der Temperierwalze 4 vorgesehen, die bevorzugt durch einen Luftstrahl realisiert sind oder durch Mittel zur Herstellung einer elektrostatischen Aufladung. Demgemäß wird über die Leitung 8 Luft zugeführt und über das poröse Material im Mittenbereich M der Temperierwalze 4 ausgebracht, so dass sich zwischen der Oberfläche der Temperierwalze 4 in deren Mittenbereich und der Folie 1 ein Luftpolster 5 ausbildet, welches die Folie 1 von der Temperierwalze 4 abhält. In Figur 2 ist dies schematisch eingezeichnet, wobei die Figur dies aus der eigentlichen Kontaktebene zwischen Folie 1 und Temperierwalze 4 herausgedreht darstellt.

Die über die Leitung 8 der Temperierwalze zugeleitete Luft wird dabei mit geeigneten Mitteln (z. B. mittels eines Industrieföns) so erhitzt, dass das Luftpolster 5 eine entsprechend hohe Temperatur aufweist, um die oben genannten verfahrenstechnischen Bedingungen einhalten zu können.

Das geschmolzene Polymer tritt also als Folie 1 mit Schmelzetemperatur aus dem Düsenspalt der Flachdüse 2 aus und wird in kurzem Abstand auf die darunter angeordnete Relaxiervorrichtung in Form der Temperierwalze 4 gegossen. Der Folienvorhang wird im Randbereich R auf den rotierenden Walzenkörper der Temperierwalze 4 mittels Randstreifenelektroden, die nach dem Prinzip der elektrostatischen Aufladung arbeiten, angeheftet. Der Mittenbereich M der Temperierwalze 4 weist eine mikroporöse Oberfläche auf, aus der Luft austritt, die über die Leitung 8 zugeführt wird; hierdurch wird das Luftpolster 5 gebildet, auf dem die aufgegossene Folie 1 ohne Beschädigung gleiten kann. Die aufgegossen Folie 1 umgibt die Temperierwalze 4 entlang eines Umschlingungswinkels a, der im Ausführungsbeispiel ca. 120° beträgt, und wird dann in kurzem Abstand an die darunter angeordnete Kühlwalze 3 übergeben. Auf der Kühlwalze 3 wird die Folie 1 neuerlich mit Randbefestigungsmitteln 9 (elektrostatische Aufladungselektrode oder Luftstrahl) angeheftet.

Um einen Lufteinzug zwischen Folie 1 und Oberfläche der Kühlwalze 3 zu verhindern, wird der Ausgang der Vakuumbox 6 im Spalt zwischen der Temperierwalze 4 und der Kühlwalze 3 angeordnet und so in diesem Bereich ein Unterdruck erzeugt.

Um die Kühllänge der Kühlwalze 3 möglichst auszunutzen, wird die Kühlwalze 3 mit der aufgelegten Folie 1 möglichst weit umschlungen, und zwar im Ausführungsbeispiel bis zu der Abhebewalze 10, die sich in unmittelbarer Nachbarschaft zur genannten Vakuumbox 6 befindet.

Die aus der porösen Keramik des Mittenbereichs M der Temperierwalze 4 austretende Luft bildet, wie erläutert, das Luftpolster 5, auf dem die Folie 1 gleiten kann. Dabei ist die hier eingegebene Luft zur Bildung des Luftpolsters 5 erhitzt, und zwar auf die oben genannten Werte. Dabei kann die Temperatur der über die Leitung 8 eingegebenen Luft zur Bildung des Luftpolsters 5 auch größer als die Schmelztemperatur des anliegenden Polymers gewählt werden. Durch die so erhöhte Temperatur der Luft, die das Luftpolster 5 bildet, wird die Folie 1 über dem Luftpolster 5 nur sehr langsam bzw. gar nicht abgekühlt.

Die mittlere Folientemperatur kann dabei gegebenenfalls über der Vicat-Temperatur gehalten werden, so dass sie nicht vollkommen erstarrt sondern eine fortgesetzte Relaxation der Folienstruktur mit hoher Relaxationsgeschwindigkeit erlaubt.

Ohne die vorgeschlagene Maßnahme würde die Gefahr bestehen, dass die Folie 1 mit der Oberfläche der Temperierwalze 4 in deren Mittenbereich M verklebt. Dies wird durch die über die Leitung 8 zugegebene Luft und das so geschaffene Luftpolster 5 verhindert. Das Luftpolster 5 verhindert auch, dass die poröse Oberfläche des Mittenbereichs M der Temperierwalze 4 verschmutzt wird.

Die Randbereiche R der Temperierwalze 4 entsprechen im Durchmesser der Krümmung des von der Folie umschlungenen Mittenbereichs M. Die Randbereiche R sind gleichermaßen temperierbar, wobei hier ein Temperaturbereich zwischen 10 °C und 95 °C vorgesehen ist. Die Temperatur wird hier so gewählt, dass die Folie 1 soweit erkaltet ist, dass sich im Bereich der Folienränder tragfähige Folienbänder bilden, zwischen denen der Mittenbereich der Folie 1, der auf dem Luftpolster 5 schwebt, quasi eingespannt ist und so durch die Ränder vorwärts gezogen wird. Die insoweit stabileren Randbereiche der Folie 1 stabilisieren also den Transport des Mittenbereichs der Folie 1.

Die Temperierwalze 4 ist elektromotorisch angetrieben. Die Umfangsgeschwindigkeit der Temperierwalze beträgt dabei bevorzugt das 0,5- bis 1,0-Fache der Umfangsgeschwindigkeit der Kühlwalze 3. Die Geschwindigkeit wird dabei so eingestellt, dass einerseits der "Neck-In" der Folie 1 vermindert wird, andererseits aber der über dem Luftpolster 5 schwebende Abschnitt der Folie 1 nicht voreilt oder zurückbleibt.

Für die Ableitung der heißen Luft aus Mittenbereich der Temperierwalze kann ein Luftleitblech vorgesehen werden.

Bei der Wahl der Temperatur des Luftpolsters hängt diese von den vorhandenen Schichten in der Folie ab. Ist beispielsweise PET als Lage in der Folie vorhanden, ist der Schmelzpunkt dieser Lage wesentlich höher. In diesem Fall kann die Lufttemperatur sogar über die Schmelztemperatur des Cling-Material der Folie erhöht werden. Trotzdem besteht keine Gefahr, dass die Folie abreißt.

Eine hohe Temperatur im Mittenbereich der Temperierwalze ist sehr vorteilhaft hinsichtlich der Relaxation und auch hinsichtlich der Oberflächenqualität der Folie, wenn diese auf die Kühlwalze auftrifft.

Durch die dreiteilige Ausgestaltung der Temperierwalze (drei Teile, die sich in axiale Richtung aufeinanderfolgend anschließen) wird es in einfacher Weise ermöglicht, eine Fixierung der Randstreifen vorzunehmen und so den Neck-In der Folie zu verhindern. Ansonsten wird durch das erzeugte Luftpolster erreicht, dass die Folie im Mittenbereich der Temperierwalze auf der Oberfläche der Walze gleitet bzw. "schwebt".

Durch die vorgeschlagene Vorgehensweise wird erreicht, dass für die Relaxation hinreichend Zeit sowie eine optimale Temperatur gegeben ist, wobei gleichzeitig dafür Sorge getragen ist, dass eine optimale Führung der Folie vorliegt und diese somit auch bei hohen Produktionsgeschwindigkeiten stabil geführt ist.

In diesem Zusammenhang ist es vorteilhaft, wenn die Randbereiche der Temperierwalze einerseits und der Mittenbereich derselben andererseits unabhängig voneinander, d. h. mit der Möglichkeit unterschiedlicher Drehgeschwindigkeiten, angetrieben werden. Mit dem separaten Antrieb besteht die Möglichkeit, den Mittenteil schneller als die Randteile der Walze rotieren zu lassen und so eine Schleppwirkung zu erzielen.

Durch die beheizte Luft zur Bildung des Luftpolster, die die Abkühlung der Folie kompensiert, besteht die vorteilhafte Möglichkeit, die Relaxierstrecke groß zu halten, indem der Durchmesser der Temperierwalze entsprechend gewählt wird. Dennoch ist stets eine stabile Folienführung vorhanden.

### Bezugszeichenliste:

- 1: Kunststoff-Folie (mehrschichtige Dehnfolie)
- 2: Flachdüse mit Düsenaustritt
- 3: Kühlwalze
- 4: Temperierwalze (Relaxationsvorrichtung)
- 5: Luftpolster
- 6: Mittel zur Erzeugung eines Unterdrucks (Vakuumbox)
- 7: Mittel zur Herstellung eines Kontakts zwischen Folie und Temperierwalze
- 8: Leitung zur Zuleitung von Luft
- 9: Mittel zur Herstellung eines Kontakts zwischen Folie und Kühlwalze
- 10: Abhebewalze
- 11: Infrarotstrahler

- M: Mittenbereich der Temperierwalze (aus porösem Material)
- R: Randbereich der Temperierwalze (angetriebener rotierender Walzenkörper)

- F: Förderrichtung
- α: Umschlingungswinkel

## Patentansprüche

1. Verfahren zur Herstellung einer Kunststoff-Folie (1), insbesondere einer mehrschichtigen Dehnfolie, bei der Kunststoffmaterial aus einer Flachdüse (2) ausgebracht wird und in Förderrichtung (F) nachfolgend um mindestens eine Kühlwalze (3) geführt und dabei abgekühlt wird, wobei die Folie (1) zwischen der Flachdüse (2) und der Kühlwalze (3) über einen vorgegebenen Umschlingungswinkel (a) um eine Temperierwalze (4) geführt wird,
**dadurch gekennzeichnet, dass**
die Temperierwalze (4) einen Mittenbereich (M) und zwei an diesen angrenzende Randbereiche (R) aufweist, wobei die Folie (1) im Mittenbereich (M) von der Temperierwalze (4) zumindest abschnittsweise auf Abstand gehalten wird, indem im Mittenbereich (M) der Temperierwalze (4) zwischen der Oberfläche der Temperierwalze (4) und der Folie (1) ein Luftpolster (5) erzeugt wird, indem im Mittenbereich (M) der Temperierwalze (4) erhitzte Druckluft zwischen die Oberfläche der Temperierwalze (4) und die Folie (1) zugeführt wird, wobei die Folie (1) in den Randbereichen (R) mit der Temperierwalze (4) in Kontakt gebracht wird und wobei die Temperatur der Druckluft bei deren Zuleitung in die Temperierwalze (4) zwischen 60 °C und 350 °C liegt, vorzugsweise zwischen 100 °C und 250 °C.

2. Verfahren nach Anspruch 1, **dadurch gekennzeichnet, dass** in einem Bereich, der sich über die Breite der Folie (1) und von der der Temperierwalze (4) abgewandten Seite der Folie (1) bis zur Kühlwalze (3) erstreckt, gegenüber dem Umgebungsdruck ein Unterdruck erzeugt wird, wobei der Unterdruck insbesondere im Bereich von der Ablösung der Folie (1) von der Temperierwalze (4) bis zur Kontaktnahme der Folie (1) mit der Kühlwalze (3) über der Breite der Folie (1) erzeugt wird.

3. Verfahren nach Anspruch 1 oder 2, **dadurch gekennzeichnet, dass** die Kontaktnahme zwischen Folie (1) und der Temperierwalze (4) durch elektrostatische Kräfte erzeugt wird und/oder dass die Kontaktnahme zwischen Folie (1) und der Temperierwalze (4) durch Aufbringen eines Luftstroms auf die Folie (1) erzeugt wird, wobei die Kontaktnahme zwischen Folie (1) und Temperierwalze (4) vorzugsweise auf die Ränder der Folie beschränkt ist.

4. Verfahren nach einem der Ansprüche 1 bis 3, **dadurch gekennzeichnet, dass** die Erzeugung des Luftpolsters (5) erfolgt, indem im Mittenbereich (M) der Temperierwalze (4) die erhitzte Druckluft durch ein porös ausgebildetes Material der Temperierwalze (4) zwischen die Oberfläche der Temperierwalze (4) und die Folie (1) zugeführt wird.

5. Verfahren nach einem der Ansprüche 1 bis 4, **dadurch gekennzeichnet, dass** die Temperatur der erhitzen Luft oberhalb der Vicat-Erweichungstemperatur des Materials liegt, aus dem die Folie (1) besteht, insbesondere aus dem eine Haftschicht (Clinglayer) der Folie (1) besteht.

6. Verfahren nach einem der Ansprüche 1 bis 5, **dadurch gekennzeichnet, dass** die Temperierwalze (4) im Mittenbereich (M) auf einer höheren Temperatur gehalten wird als in den Randbereichen (R), wobei die Temperatur in den Randbereichen (R) vorzugsweise zwischen 10 °C und 95 °C gehalten wird.

7. Verfahren nach einem der Ansprüche 1 bis 6, **dadurch gekennzeichnet, dass** die Folie (1) mit einer Geschwindigkeit von mindestens 400 m/min, vorzugsweise von mindestens 750 m/min und besonders bevorzugt mit mindestens 900 m/min, von der Kühlwalze (3) abgeführt wird.

8. Verfahren nach einem der Ansprüche 1 bis 7, **dadurch gekennzeichnet, dass** die Folie (1) frei von weiteren laminierten Schichten und wie auf die Temperierwalze (4) aufgebracht von der Kühlwalze (3) abgeführt wird.

9. Vorrichtung zur Herstellung einer Kunststoff-Folie (1), insbesondere einer mehrschichtigen Dehnfolie, umfassend eine Flachdüse (2), über die Kunststoffmaterial ausgebracht werden kann, und mindestens eine in Förderrichtung (F) nachfolgende Kühlwalze (3) für die Abkühlung der Folie (1), wobei eine Temperierwalze (4) angeordnet ist, die zwischen der Flachdüse (2) und der Kühlwalze (3) angeordnet ist und über die die Folie (1) über einen vorgegebenen Umschlingungswinkel (a) geführt werden kann,
**dadurch gekennzeichnet, dass**
die Temperierwalze (4) einen Mittenbereich (M) und zwei an diesen angrenzende Randbereiche (R) aufweist, wobei die Bereiche durch separate in axiale Richtung aufeinander folgende Walzenteile gebildet werden, wobei die Temperierwalze (4) im Mittenbereich (M) zumindest abschnittsweise und zumindest teilweise aus einem porösen Material besteht, welches mit mindestens einer Leitung (8) zur Zuleitung von Luft in das poröse Material in Verbindung steht, um zwischen der Folie (1) und dem Mittenbereich (M) ein Luftpolster ausbilden zu können, und wobei in den Randbereichen (R) Mittel (7) zur Herstellung eines Kontakts zwischen der Folie (1) und der Temperierwalze (4) angeordnet sind.

10. Vorrichtung nach Anspruch 9, **dadurch gekennzeichnet, dass** Mittel (6) zur Erzeugung eines Unterdrucks in einem Bereich, der sich über die Breite der Folie (1) und von der der Temperierwalze (4) abgewandten Seite der Folie (1) bis zur Kühlwalze (3) erstreckt, vorhanden sind.

11. Vorrichtung nach Anspruch 9 oder 10, **dadurch gekennzeichnet, dass** in den Randbereichen (R) Mittel zur Erzeugung eines elektrostatischen Feldes oder Mittel zur Ausbringung eines Luftstroms auf die Folie (1) angeordnet sind.

12. Vorrichtung nach einem der Ansprüche 9 bis 11, **dadurch gekennzeichnet, dass** die Temperierwalze (4) einmal im Mittenbereich (M) und jeweils in den beiden Randbereichen (R) aus rotationssymmetrischen Teilen besteht, die jeweils mit einem elektromotorischen Antrieb verbunden sind, um einmal das rotationssymmetrische Teil des Mittenbereichs (M) und einmal die rotationssymmetrischen Teile der beiden Randbereiche (R) mit individueller Drehgeschwindigkeit antreiben zu können.

13. Vorrichtung nach einem der Ansprüche 9 bis 11, **dadurch gekennzeichnet, dass** die Temperierwalze (4) in den beiden Randbereichen (R) aus rotationssymmetrischen Teilen besteht, die jeweils mit einem elektromotorischen Antrieb verbunden sind, wobei das den Mittenbereich (M) bildende Teil der Temperierwalze (4) nicht-drehbar angeordnet ist.

14. Vorrichtung nach Anspruch 13, **dadurch gekennzeichnet, dass** der Mittenbereich (M) durch ein nicht rotationssymmetrisches Teil gebildet wird.

## Claims

1. Method for the production of a plastic foil (1), especially of a multi-layer stretch film, at which plastic material is extruded from a flat extrusion die (2) and is subsequently guided around at least one cooling roll (3) following in the conveying direction (F) and is cooled thereby, wherein the foil (1) is guided between the flat extrusion die (2) and the cooling roll (3) around a temperature controlling roll (4) along a given angle of contact (α),
**characterized in**
**that** the temperature controlling roll (4) has a centre region (M) and two edge regions (R) adjoining to the same, wherein the foil (1) is kept at least in sections at a distance from the temperature controlling roll (4) in the centre region (M) by creating a air cushion (5) in the centre region (M) of the temperature controlling roll (4) between the surface of the temperature controlling roll (4) and the foil (1) by supplying heated air between the surface of the temperature controlling roll (4) and the foil (1) in the centre region (M) of the temperature controlling roll (4), wherein the foil (1) is brought into contact with the temperature controlling roll (4) in the edge regions (R) and wherein the temperature of the pressurized air at its supply into the temperature controlling roll (4) is between 60 °C and 350 °C, preferably between 100 °C and 250 °C.

2. Method according to claim 1, **characterized in that** in a region which extends along the width of the foil (1) and from the side of the foil (1) which is averted from the temperature controlling roll (4) up to the cooling roll (3) a vacuum against the ambient pressure is created, wherein the vacuum is created especially in the region from the lift off of the foil (1) from the temperature controlling roll (4) up to the contact of the foil (1) with the cooling roll (3) along the width of the foil (1).

3. Method according to claim 1 or 2, **characterized in that** the contact between the foil (1) and the temperature controlling roll (4) is created by electrostatic forces and/or that the contact between the foil (1) and the temperature controlling roll (4) is created by applying of an airstream onto the foil (1), wherein the contact between the foil (1) and the temperature controlling roll (4) is preferably limited to the edges of the foil.

4. Method according to one of claims 1 to 3, **characterized in that** the creation of the air cushion (5) takes place by supplying the heated pressurized air through a porous material of the temperature controlling roll (4) in the centre region (M) of the temperature controlling roll (4) between the surface of the temperature controlling roll (4) and the foil (1).

5. Method according to one of claims 1 to 4, **characterized in that** the temperature of the heated air is above of the Vicat softening temperature of the material of the foil (1), especially of an undercoating (clinglayer) of the foil (1).

6. Method according to one of claims 1 to 5, **characterized in that** the temperature controlling roll (4) is kept on a higher temperature in the centre region (M) than in the edge regions (R), wherein the temperature in the edge regions (R) is preferably kept between 10 °C and 95 °C.

7. Method according to one of claims 1 to 6, **characterized in that** the foil (1) is conveyed with speed of at least 400 m/min, preferably of at least 750 m/min and specifically preferred with at least 900 m/min from the cooling roll (3).

8. Method according to one of claims 1 to 7, **characterized in that** the foil (1) is free from further laminated layers and as applied onto the temperature controlling roll (4) is conveyed from the cooling roll (3).

9. Device for the production of a plastic foil (1), especially of a multi-layer stretch film, comprising a flat extrusion die (2) by which plastic material can be output and at least one cooling roll (3) following subsequently in the conveying direction (F) for cooling the foil (1), wherein a temperature controlling roll (4) is arranged between the flat extrusion die (2) and the cooling roll (3) and around which the foil (1) can be guided along a given angle of contact (α),
**characterized in**
**that** the temperature controlling roll (4) has a centre region (M) and two edge regions (R) adjoining to the same, wherein the regions are formed by separate roll parts which follow in axial direction to another, wherein the temperature controlling roll (4) consists in the centre region (M) at least in sections and at least partially from a porous material which is connected with at least one conduit (8) for the supply of air into the porous material to create an air cushion between the foil (1) and the centre region (M) and wherein in the edge regions (R) means (7) are arranged for creation of a contact between the foil (1) and the temperature controlling roll (4).

10. Device according to claim 9, **characterized in that** means (6) for creation of a vacuum are provided in a region which extends along the width of the foil (1) and from the side of the foil (1) which is averted from the temperature controlling roll (4) up to the cooling roll (3).

11. Device according to claim 9 or 10, **characterized in that** in the edge regions (R) means for creation of an electrostatic field or means for applying of an airstream onto the foil (1).

12. Device according to one of claims 9 to 11, **characterized in that** the temperature controlling roll (4) consists in the centre region (M) and also in both edge regions (R) of rotationally symmetric parts which each are connected with an electromotive drive to drive at the one hand the rotationally symmetric part of the centre region (M) and at the other hand the rotationally symmetric parts of both edge regions (R) with individual rotational speed.

13. Device according to one of claims 9 to 11, **characterized in that** the temperature controlling roll (4) consist of rotationally symmetric parts in both edge regions (R) which each are connected with an electromotive drive, wherein the part of the temperature controlling roll (4) which forms the centre region (M) is arranged in a non-rotatable manner.

14. Device according to claim 13, **characterized in that** the centre region (M) is formed by a non rotationally symmetric part.

## Revendications

1. Procédé de fabrication d'un film en matière plastique (1), notamment d'un film étirable multicouche, selon lequel de la matière plastique est émise à partir d'une buse plate (2) et, ultérieurement dans la direction de transport (F), acheminée autour d'au moins un cylindre de refroidissement (3) et refroidie, le film (1) étant acheminé entre la buse plate (2) et le cylindre de refroidissement (3) à un angle d'enveloppement prédéterminé (a) autour d'un cylindre de conditionnement en température (4),
**caractérisé en ce que**
le cylindre de conditionnement en température (4) comprend une zone centrale (M) et deux zones de bord (R) adjacentes à celle-ci, le film (1) étant tenu à distance du cylindre de conditionnement en température (4) au moins en sections dans la zone centrale (M), par génération d'un coussin d'air (5) dans la zone centrale (M) du cylindre de conditionnement en température (4) entre la surface du cylindre de conditionnement en température (4) et le film (1), par introduction d'air comprimé chauffé dans la zone centrale (M) du cylindre de conditionnement en température (4) entre la surface du cylindre de conditionnement en température (4) et le film (1), le film (1) étant mis en contact avec le cylindre de conditionnement en température (4) dans les zones de bord (R) et la température de l'air comprimé lors de son introduction dans le cylindre de conditionnement en température (4) étant comprise entre 60 °C et 350 °C, de préférence entre 100 °C et 250 °C.

2. Procédé selon la revendication 1, **caractérisé en ce qu'**une sous-pression par rapport à la pression ambiante est générée dans une zone qui s'étend sur la largeur du film (1) et à partir du côté détourné du cylindre de conditionnement en température (4) du film (1) jusqu'au cylindre de refroidissement (3), la sous-pression étant générée notamment dans la zone allant du décollement du film (1) du cylindre de conditionnement en température (4) jusqu'au contact du film (1) avec le cylindre de refroidissement (3) sur la largeur du film (1) .

3. Procédé selon la revendication 1 ou 2, **caractérisé en ce que** le contact entre le film (1) et le cylindre de conditionnement en température (4) est généré par des forces électrostatiques et/ou **en ce que** le contact entre le film (1) et le cylindre de conditionnement en température (4) est généré par application d'un courant d'air sur le film (1), le contact entre le film (1) et le cylindre de conditionnement en température (4) étant de préférence limité au bords du film.

4. Procédé selon l'une quelconque des revendications 1 à 3, **caractérisé en ce que** la génération du coussin d'air (5) a lieu par introduction de l'air comprimé chauffé dans la zone centrale (M) du cylindre de conditionnement en température (4) au travers d'un matériau configuré sous forme poreuse du cylindre de conditionnement en température (4) entre la surface du cylindre de conditionnement en température (4) et le film (1).

5. Procédé selon l'une quelconque des revendications 1 à 4, **caractérisé en ce que** la température de l'air chauffé est située au-dessus de la température de ramollissement de Vicat du matériau dont le film (1) est constitué, notamment dont une couche d'adhésion (cling layer) du film (1) est constituée.

6. Procédé selon l'une quelconque des revendications 1 à 5, **caractérisé en ce que** le cylindre de conditionnement en température (4) est maintenu à une température plus élevée dans la zone centrale (M) que dans les zones de bord (R), la température dans les zones de bord (R) étant de préférence maintenue entre 10 °C et 95 °C.

7. Procédé selon l'une quelconque des revendications 1 à 6, **caractérisé en ce que** le film (1) est déchargé du cylindre de refroidissement (3) à une vitesse d'au moins 400 m/minute, de préférence d'au moins 750 m/minute et de manière particulièrement préférée d'au moins 900 m/minute.

8. Procédé selon l'une quelconque des revendications 1 à 7, **caractérisé en ce que** le film (1) est déchargé du cylindre de refroidissement (3) sans couches stratifiées supplémentaires et tel qu'appliqué sur le cylindre de conditionnement en température (4).

9. Dispositif pour la fabrication d'un film en matière plastique (1), notamment d'un film étirable multicouche, comprenant une buse plate (2), par l'intermédiaire de laquelle de la matière plastique peut être émise, et au moins un cylindre de refroidissement (3) ultérieur dans la direction de transport (F) pour le refroidissement du film (1), un cylindre de conditionnement en température (4) étant agencé, qui est agencé entre la buse plate (2) et le cylindre de refroidissement (3) et sur lequel le film (1) peut être acheminé à un angle d'enveloppement prédéterminé (α),
**caractérisé en ce que**
le cylindre de conditionnement en température (4) comprend une zone centrale (M) et deux zones de bord (R) adjacentes à celle-ci, les zones étant formées par des parties de cylindre séparées successives dans la direction axiale, le cylindre de conditionnement en température (4) étant constitué dans la zone centrale (M) au moins en sections et au moins partiellement par un matériau poreux, qui est raccordé avec au moins une conduite (8) pour l'introduction d'air dans le matériau poreux, afin de pouvoir former un coussin d'air entre le film (1) et la zone centrale (M), et des moyens (7) pour la création d'un contact entre le film (1) et le cylindre de conditionnement en température (4) étant agencés dans les zones de bord (R).

10. Dispositif selon la revendication 9, **caractérisé en ce que** des moyens (6) pour la génération d'une sous-pression dans une zone qui s'étend sur la largeur du film (1) et à partir du côté détourné du cylindre de conditionnement en température (4) du film (1) jusqu'au cylindre de refroidissement (3) sont présents.

11. Dispositif selon la revendication 9 ou 10, **caractérisé en ce que** des moyens pour la génération d'un champ électrostatique ou des moyens pour l'émission d'un courant d'air sur le film (1) sont agencés dans les zones de bord (R).

12. Dispositif selon l'une quelconque des revendications 9 à 11, **caractérisé en ce que** le cylindre de conditionnement en température (4) est constitué une fois dans la zone centrale (M) et à chaque fois dans les deux zones de bord (R) par des parties symétriques en rotation, qui sont chacune reliées avec un entraînement à moteur électrique, afin de pouvoir entraîner une fois la partie symétrique en rotation de la zone centrale (M) et une fois les parties symétriques en rotation des deux zones de bord (R) à des vitesses de rotation individuelles.

13. Dispositif selon l'une quelconque des revendications 9 à 11, **caractérisé en ce que** le cylindre de conditionnement en température (4) est constitué dans les deux zones de bord (R) par des parties symétriques en rotation, qui sont chacune reliées avec un entraînement à moteur électrique, la partie formant la zone centrale (M) du cylindre de conditionnement en température (4) étant agencée de manière non rotative.

14. Dispositif selon la revendication 13, **caractérisé en ce que** la zone centrale (M) est formée par une partie non symétrique en rotation.
